# EUROPÄISCHE PATENTSCHRIFT

(11) **EP 3 248 850 B1**
(45) Veröffentlichungstag und Bekanntmachung des Hinweises auf die Patenterteilung: **01.09.2021**
(21) Anmeldenummer: 17173270.4
(22) Anmeldetag: 29.05.2017
(51) Int. Cl.: B60T 13/46

(54) **VERFAHREN ZUM BETRIEB EINER VAKUUMPUMPE SOWIE VAKUUMPUMPENANORDNUNG**
METHOD FOR OPERATING A VACUUM PUMP AND VACUUM PUMP ASSEMBLY
PROCÉDÉ DE FONCTIONNEMENT D'UNE POMPE À VIDE ET SYSTÈME DE POMPE À VIDE

(30) Priorität: 27.05.2016 DE 102016109766; 30.05.2016 DE 102016109907
(43) Veröffentlichungstag der Anmeldung: 29.11.2017
(73) Patentinhaber: Aqseptence Group GmbH, 65326 Aarbergen (DE)
(72) Erfinder: Pierdolla, Markus, 63814 Mainaschaff (DE)
(74) Vertreter: Stoffregen, Hans-Herbert

(56) Entgegenhaltungen:
- WO-A1-93/11983
- WO-A1-2004/090332
- DE-A1- 19 929 880
- DE-A1-102006 004 288
- US-A1- 2007 240 421
- US-B1- 6 481 973

## Beschreibung

Die Erfindung bezieht sich auf ein Verfahren zum Betrieb einer Vakuumpumpe nach dem Oberbegriff des Anspruchs 1.

Die WO 2004/090332 A1 betrifft ein Verfahren zum Betrieb einer Vakuumpumpe wie Drehkolben-Vakuumpumpe zum Fördern von Luft in einem Unterdruck-Entwässerungssystem, wobei die Vakuumpumpe mit einem Antrieb gekoppelt ist, dessen Drehzahl mittels eines Frequenzumrichters gesteuert bzw. geregelt ist, wobei die Vakuumpumpe eingeschaltet wird, wenn ein Unterdruck in einem Ansaugrohr der Vakuumpumpe unter einen vorgegebenen Grenzwert fällt.

Die US 6,481,973 B1 betrifft ein Verfahren zum Betrieb einer Tauchpumpe mit verschiedenen Drehzahlen. Bei dem Betrieb wird das von dem Pumpenmotor erzeugte Drehmoment überwacht, um festzustellen, ob die Pumpe blockiert ist. Wenn das von dem Motor aufgebrachte Drehmoment ein für die ausgewählte Drehzahl maximales Drehmoment überschreitet, wird die Drehzahl der Pumpe reduziert, wodurch das maximale akzeptierbare Drehmoment für den Motor reduziert wird. Wenn die ausgewählte Geschwindigkeit auf eine minimale Geschwindigkeit reduziert ist und festgestellt wurde, dass die Pumpe immer noch blockiert, kann die Pumpe rückwärts betrieben werden. Die Schritte zum Betrieb der Pumpe im Vorwärtsbetrieb können wiederholt werden, um die Blockierung aufzulösen.

Ein Verfahren zum Betrieb einer Vakuumpumpe sowie eine Vakuumpumpenanordnung zum Betreiben von Unterdruckentwässerungssystemen sowie zum Fördern von Abwasser, insbesondere auf Wasserfahrzeugen, ist aus der DE 10 2010 061 494 A1 bekannt. Die Pumpenanordnung weist eine Antriebsvorrichtung mit einer Antriebswelle auf, die mittels der Antriebsvorrichtung rotierbar ist. Bei der Antriebsvorrichtung kann es sich beispielsweise um einen Motor, insbesondere einen Elektromotor, handeln. Ein solcher Motor kann in Antriebsverbindung mit der Arbeitswelle stehen. Die Antriebsvorrichtung kann mit einem direkt aufgebauten Frequenzumrichter ausgeführt sein, um die Drehzahl zu steuern.

Die EP 1 397 595 B1 betrifft eine flüssigkeitsdichtende Pumpe mit wellenförmiger Schraube, insbesondere zur Verwendung in einem Vakuumentwässerungssystem und bei Langzeitleerlauf der Pumpe. Die Pumpe umfasst ein Pumpengehäuse mit einem Einlass, einem Auslass und einem innerhalb des Gehäuses vorgesehen Schraubenrotor mit Wendelform, der mittels eines Motors angetrieben wird. Der Auslass der Pumpe ist mit einem Dichtflüssigkeitstank ausgestattet, um zu ermöglichen, dass Flüssigkeit im Tank zurück zur Pumpe durch den Auslass fließt, um dadurch die Flüssigkeitsdichtung bei Leerlauf der Pumpe aufrechtzuerhalten.

Die DE 10 2005 027 091 A1 betrifft ein Betriebsverfahren für eine Abwasserhebeanlage und eine mit diesem Verfahren betriebene Anlage. Die für verschiedene markante Betriebspunkte signifikanten Drehzahlen einer Kreiselpumpe werden mit Hilfe eines mit einem programmierbaren Frequenzumformer ausgestatteten, die Kreispumpe antreibenden Elektromotor ermittelt und die daraus resultierenden Daten werden in einer die Anlage steuernde Zentraleinheit gespeichert und dem weiteren Betrieb zugrundegelegt.

Die DE 601 23 882 T2 betrifft ein Verfahren zum Transportieren von Abwasser in einem Vakuumabwassersystem. Bei dem Verfahren ist vorgesehen, dass eine Drehkolbenpumpe als Einrichtung zur Erzeugung und Aufrechterhaltung eines vorbestimmten Vakuumpegels in einer Abwasserleitung verwendet wird und dass das Abwasser mittels des Vakuums direkt von einer Abwasserquelle durch die Abwasserleitung in und durch die Drehkolbenpumpe und weiter zu einem Sammel- oder Entsorgungsraum für Abwasser transportiert wird.

Die DE 60 2004 008 258 T2 betrifft den konstruktiven Aufbau einer Flüssigkeitsringschraubenpumpe.

Die DE 10 2012 006 444 A1 betrifft ein Verfahren zum Betreiben eines Pumpenaggregats sowie ein entsprechendes Pumpenaggregat. Das Pumpenaggregat stellt dabei einen diesem vorgegebenen Soll-Volumenstrom auf der Grundlage einer physikalischen Größe des Pumpenaggregats selbstständig ein, wobei die Größe der von dem Pumpenaggregat aufgenommene Strom und/oder eine von diesem abhängige Größe ist.

Die WO 2011/128502 A1 betrifft eine Flüssigkeitsringpumpe und ein Verfahren zum Betrieb einer solchen.

Die US 5,344,085 B bezieht sich auf ein Vakuumabwassersystem für sanitäre Einrichtungen wie z.B. Toiletten oder Urinale. Das System umfasst Abflussrohre, die mit den Sanitäreinrichtungen verbunden sind und in einem Sammelrohr enden, eine Vakuumeinrichtung, die mit dem Sammelrohr verbunden ist, um ein Vakuum in den Rohren zu erzeugen und Abwasser von den Sanitäreinrichtungen in z.B. einem Sammeltank zu transportieren.

Die US 2011/0129355 A1 bezieht sich auf ein Verfahren zur Steuerung ein oder mehrerer Vakuumerzeuger zur Steuerung des Vakuums in einem Vakuumabwassersystem, insbesondere zur Steuerung ein oder mehrerer Flüssigkeitsringschraubenpumpen in einem solchen System. Das System umfasst neben den Generatoren ein oder mehrere röhrenförmige Sammler- oder Ansaugpipelines, die mit dem Vakuumerzeuger verbunden sind und ein oder mehrere Toiletten oder Urinale, die mit der Ansaugpipeline über Verbindungspipelines verbunden sind. Die Drehgeschwindigkeit des Vakuumerzeugers wird auf der Basis der vorangestellten Vakuumbedingungen geregelt.

Davon ausgehend liegt der vorliegenden Erfindung die Aufgabe zugrunde, ein Verfahren zum Betrieb einer Vakuumpumpe der eingangs genannten Art derart weiterzubilden, dass bei kostengünstiger und kompakter Bauweise der Schutz der Vakuumpumpe in Gefahr bringenden Betriebssituationen, insbesondere bei Blockierung der Vakuumpumpe verbessert wird.

Die Aufgabe wird erfindungsgemäß durch die Merkmale des Anspruchs 1 gelöst. Das Verfahren zeichnet sich dadurch aus, dass das Drehmoment der Vakuumpumpe in Echtzeit überwacht wird, dass bei Überschreiten eines Drehmoment-Grenzwertes in einem definierten Zeitraum die Frequenzumrichter-Drehzahlregelung abgeschaltet wird, und dass für die Vakuumpumpe eine Drehrichtungsumkehr eingeleitet wird, um eine mögliche Blockierung zu beseitigen.

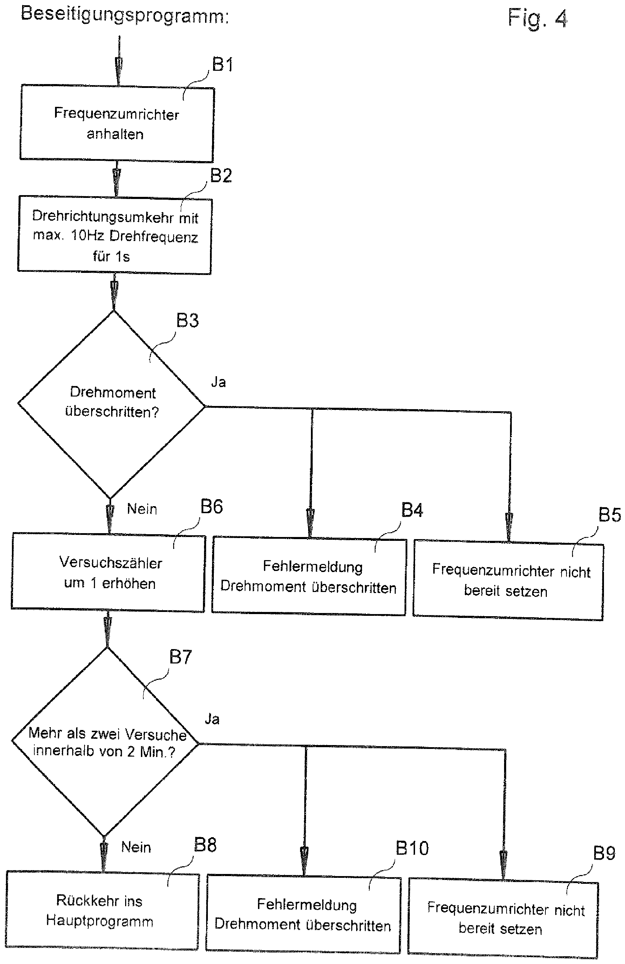

Die kontrollierte Drehrichtungsumkehr wird wiederholt, wobei nach jedem Versuch ein Versuchszähler erhöht, die Frequenzumrichter-Drehzahlregelung gestartet und das Drehmoment wieder überwacht wird. Der Versuchszähler wird zurückgesetzt, wenn der Unterdruck-Sollwert ohne Drehmomentüberschreitung erreicht und für mind. 2 Minuten sichergestellt wird (Fig. 4) oder die Vakuumpumpe wird abgeschaltet, wenn die Blockierung nach einer voreingestellten Anzahl von versuchen nicht beseitigt werden konnte.

Die Vakuumpumpe wird kontrolliert mit geringer Drehzahl von vorzugsweise 10 Hz während einer Zeitspanne von vorzugsweise 1s zurückgefahren oder wird vorzugsweise um zwei Umdrehungen zurückgefahren.

Weitere Einzelheiten, Vorteile und Merkmale der Erfindung ergeben sich nicht nur aus den Ansprüchen, den diesen zu entnehmenden Merkmalen - in Kombination -, sondern auch aus der nachfolgenden Beschreibung eines den Zeichnungen zu entnehmenden bevorzugten Ausführungsbeispiels.

Es zeigen:
- Fig. 1: eine schematische Darstellung einer Vakuumpumpenanordnung, auf welche das Verfahren gemäß der vorliegenden Erfindung anwendbar ist,
- Fig. 2a - 2c: ein Ablaufschema eines Betriebsmodus "Automatiksteuerung",
- Fig. 3: ein Drehzahl-/Unterdruck-Diagramm mit Regel-Kennlinien zur Drehzahlregelung der Vakuumpumpe,
- Fig. 4: ein Ablaufdiagramm eines Betriebsmodus "Beseitigungsprogramm",
- Fig. 5: ein Ablaufdiagramm eines Betriebsmodus "Laufzeitüberwachung",
- Fig. 6a - 6b: ein Ablaufdiagramm eines Betriebsmodus "Handsteuerung" und
- Fig. 7: ein Ablaufdiagramm eines Betriebsmodus "Quittierung".

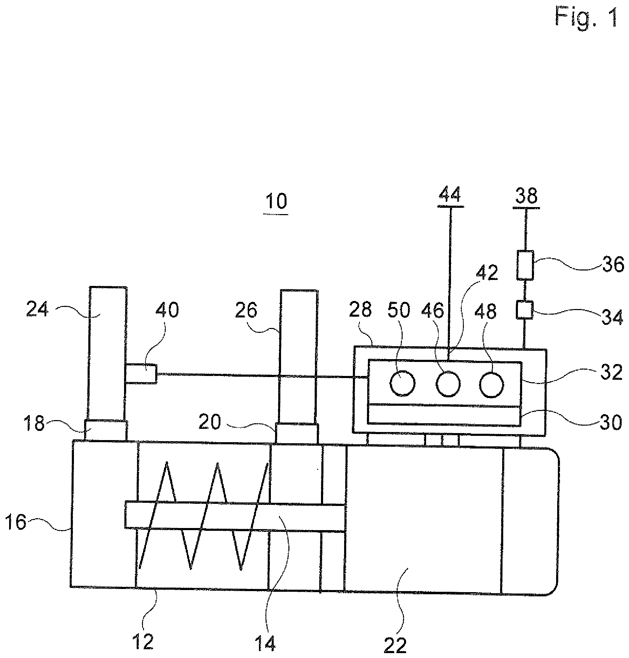

Fig. 1 zeigt eine Vakuumpumpenanordnung 10 umfassend eine flüssigkeitsdichtende Pumpe 12 mit vorzugsweise wendelförmigem Schraubenrotor 14, insbesondere zur Verwendung in Vakuumentwässerungssystemen, umfassend ein Pumpengehäuse 16 mit einem Einlass 18 und einem Auslass 20, wobei der innerhalb des Gehäuses vorgesehene Schraubenrotor 14 mittels eines elektrischen Antriebs 22 wie Elektromotor angetrieben wird.

Der Einlass 18 des Pumpengehäuses 16 ist über eine Ansaugleitung 24 mit einem Rohrleitungssystem verbunden, in welches durch Einleitungsstellen wie Toiletten, Duschen und/oder Abflüsse ein Luft-Abwasser-Gemisch in das Rohrleitungssystem eingetragen wird, welches sich in der Ansaugleitung sammelt. Der Auslass 20 des Pumpengehäuses 16 ist über eine Druckleitung 26 mit einem Abwasser-Sammeltank oder einem Abwasserkanal verbunden, in dem das Abwasser gesammelt und die Luft abgelassen wird.

Der Antrieb 22 wird über einen Antriebsregler 28 gesteuert bzw. geregelt, wobei der Antriebsregler 28 einen Frequenzumrichter 30 sowie eine speicherprogrammierbare Steuerung 32 umfasst. Der Frequenzumrichter ist über einen Hauptschalter 34 und einen Motorschutzschalter 36 mit einer Versorgungsspannung 38 verbunden.

Es ist vorgesehen, dass ein Unterdruck in der Ansaugleitung 24 mittels eines Unterdrucksensors 40 gemessen wird, der mit einem Eingang der speicherprogrammierbaren Steuerung 32 verbunden ist, um einen Unterdruck-Istwert zur Verfügung zu stellen. Ferner kann die speicherprogrammierbare Steuerung 32 über eine Schnittstelle 42 mit einem Bussystem 44 wie ProfiNet verbunden sein.

Zur Bedienung des Antriebsreglers 28 ist ein erstes Bedienelement 46 in Form eines Wahlschalters für verschiedene Betriebsmodi wie "Aus", "Automatiksteuerung" und "Handsteuerung" vorgesehen. Die Einstellung eines Unterdruck-Sollwertes erfolgt über ein zweites Bedienelement 48 in Form eines stufenlosen Sollwertgebers wie Potentiometer. Des Weiteren weist der Antriebsregler 28 ein drittes Bedienelement 50 (auf der Gehäuserückseite) in Form einer Quittiertaste mit integrierter Alarmleuchte zur Anzeige und zum Quittieren von Störmeldungen.

Die speicherprogrammierbare Steuerung 32 ist in dem Frequenzumrichter 30 integriert. Durch die Integration der speicherprogrammierbaren Steuerung 32 in den Frequenzumrichter 30 können applikationsspezifische, antriebsnahe Sonderfunktionen effizient programmiert und parametriert werden. Ferner ist der direkte Zugriff auf die Parameter sowie die analogen und digitalen Ein- und Ausgänge des Frequenzumrichters beispielsweise zur Signalvorverarbeitung möglich. Auch ist die vollständige Implementierung der Ablaufsteuerung und der Bewegungssteuerung ohne eine Zentralsteuerung möglich.

Durch den dezentralen Antriebsregler 28 mit Frequenzumrichter 30 und integrierter speicherprogrammierbarer Steuerung 32 werden einfache und komplexe Anwendungen direkt geregelt. Dadurch wird eine übergeordnete Anlagensteuerung entlastet, wodurch eine autarke Vakuumpumpanordnung realisiert ist.

Durch die speicherprogrammierbare Steuerung 32 werden Anwendungsdaten wie im vorliegenden Fall der Unterdruck-Istwert sowie der Unterdruck-Sollwert direkt ausgewertet, so dass unmittelbar eine in der speicherprogrammierbaren Steuerung 32 hinterlegte Ablaufsteuerung eingeleitet wird. Zudem können relevanten Daten über das Bussystem 44 einer Leitebene sowie weiteren vernetzten Komponenten in Echtzeit zur Verfügung gestellt werden.

Nachfolgend soll die Funktion des Regelungskonzeptes erläutert werden. Mittels des Sollwertgebers 48 wird ein Unterdruck-Sollwert auf einfache Weise eingestellt. Parametrierkenntnisse sind nicht erforderlich.

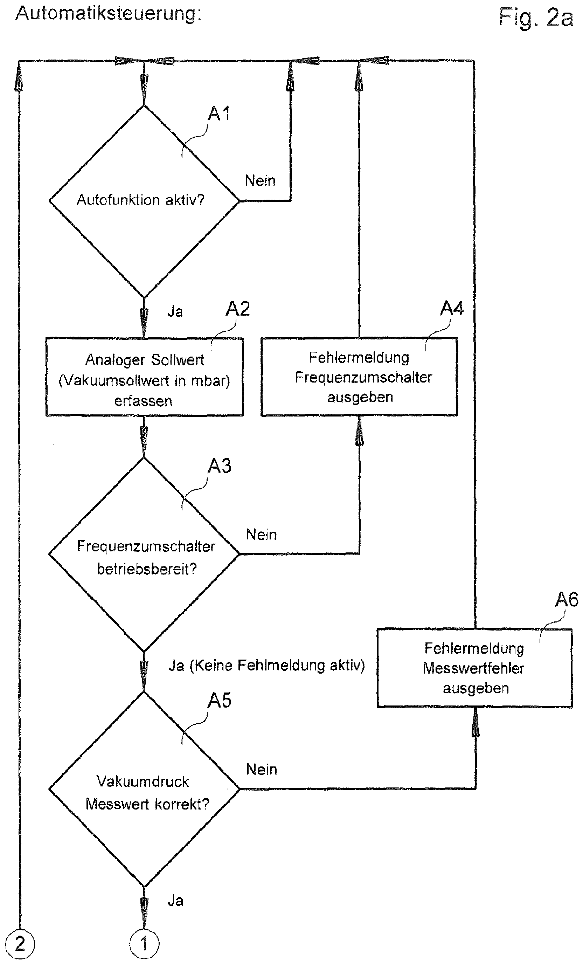

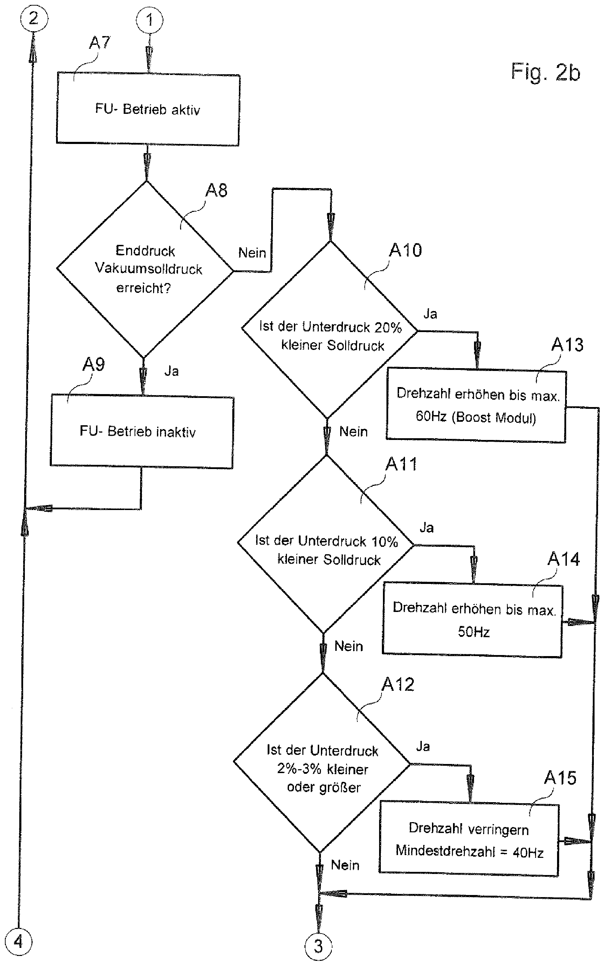

In der Betriebsart "Automatiksteuerung" wird gemäß dem in Fig. 2a) bis 2c) dargestellten Programmablauf die Drehzahl des Antriebs derart gesteuert bzw. geregelt, dass der Unterdruck in der Ansaugleitung 26 einen vorgegebenen minimalen Unterdruck nicht unterschreitet und einen vorgebbaren Unterdruck-Sollwert nicht überschreitet.

In einem ersten Verfahrensschritt A1 wird geprüft, ob die Automatikfunktion aktiv ist. Bei aktiver Automatikfunktion wird in einem Verfahrensschritt A2 der Unterdruck-Sollwert erfasst, der mittels des Sollwertgebers 48 vorgegeben wurde. In einem Verfahrensschritt A3 wird überprüft, ob der Frequenzumrichter 30 betriebsbereit ist. Sollte eine Störung vorliegen, wird in Verfahrensschritt A4 eine Fehlermeldung durch die Alarmleuchte 50 ausgegeben.

Wenn der Frequenzumrichter 30 betriebsbereit ist, wird in Verfahrensschritt A5 der Unterdruck-Istwert des Unterdruck-Sensors 40 über die speicherprogrammierbare Steuerung 32 überprüft. Sollte der Messwert nicht korrekt sein, wird in Verfahrensschritt A6 eine Fehlermeldung ausgegeben. Andernfalls wird in Verfahrensschritt A7 ein FU-Betrieb zur frequenzgesteuerten Drehzahlregelung des Antriebs 22 aktiviert. In Verfahrensschritt A8 wird ein Vergleich des gemessenen Unterdruck-Istwertes mit dem vorgegebenen Unterdruck-Sollwert durchgeführt.

Ist der Unterdruck-Solldruck in der Ansaugleitung erreicht, wird in Verfahrensschritt A9 der FU-Betrieb inaktiv geschaltet und zu Verfahrensschritt A1 zurückgekehrt.

Sollte in Verfahrensschritt A8 festgestellt werden, dass der Unterdruck-Istwert in der Ansaugleitung nicht dem Unterdruck-Sollwert entspricht, erfolgt in den Verfahrensschritten A10, A11 und A12 eine Überprüfung, ob der Unterdruck-Istwert kleiner oder größer als der Unterdruck-Sollwert ist.

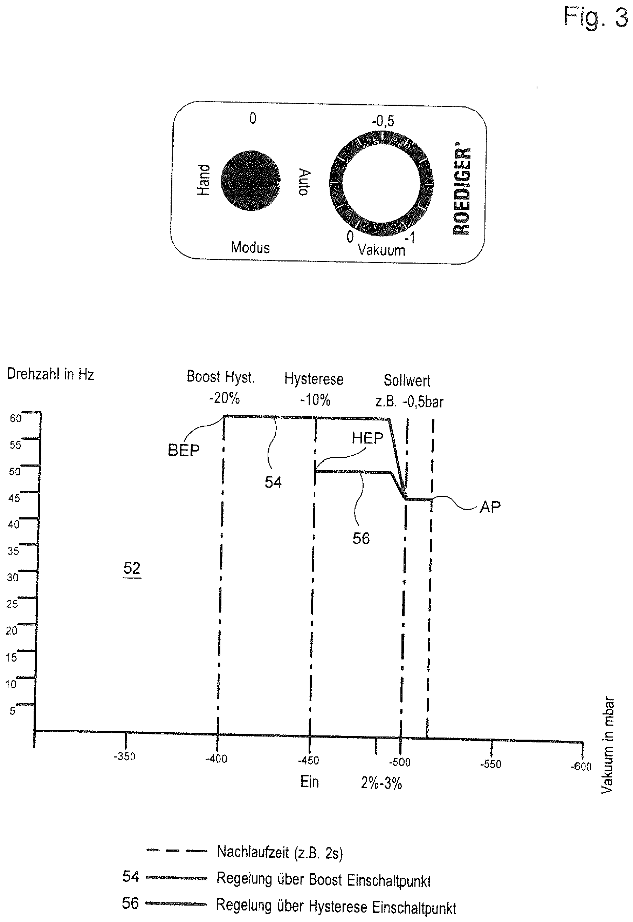

Fig. 3 zeigt ein Drehzahl-/Unterdruckdiagramm 52, in dem Regel-Kennlinien 54, 56 zur Regelung der Motordrehzahl dargestellt sind. Die Regel-Kennlinien 54, 56 sind in der Steuerung 32 programmiert, wobei die Regel-Kennlinie 54 einem optionalen "Boost"-Modus und die Regel-Kennlinie 56 einem standardmäßigen "Hysterese"-Modus entspricht.

In dem optionalen "Boost"-Modus wird in Verfahrensschritt A10 überprüft, ob der Unterdruck-Istwert 25% bis 15%, vorzugsweise 20% kleiner als der Unterdruck-Sollwert ist. Die Regelung startet automatisch bei einem Unterdruck-Istwert, der 20 % (bezogen auf den Maximalbereich) unterhalb des eingestellten Unterdruck-Sollwertes liegt (Boost Einschaltpunkt BEP). In Verfahrensschritt A13 wird die Drehzahl der Pumpe bis z.B. maximal 60 Hz oder höher erhöht.

Standardmäßig wird in Verfahrensschritt A11 überprüft, ob der Unterdruck-Istwert 5% bis 15%, vorzugsweise 10 % kleiner als der Unterdruck-Sollwert ist. Bejahendenfalls wird der Antrieb eingeschaltet (Hysterese-Einschaltpunkt HEP) und die Drehzahl in Verfahrensschritt A14 bis maximal 50 Hz erhöht.

Innerhalb des durch die Regel-Kennlinien 54, 56 vorgegebenen Regelbereichs wird die Drehzahl des Antriebs entsprechend des Unterdruck-Istwertes frequenzgeregelt, um den eingestellten Unterdruck-Sollwert zu erreichen.

Während des Betriebs der Vakuumpumpe erhöht sich der Unterdruck in der Ansaugleitung und in Verfahrensschritt A12 wird überprüft, ob der Unterdruck-Istwert in einem Bereich von 2 % bis 3 % unterhalb des Unterdruck-Sollwertes liegt. Sobald festgestellt wird, dass der Unterdruck-Istwert 2 % bis 3 % unterhalb des Unterdruck-Sollwertes liegt, wird die Drehzahl verringert, im dargestellten Ausführungsbeispiel auf 45 Hz. Nach Erreichen des Unterdruck-Sollwertes, wird der Antrieb nach einer Nachlaufzeit bzw. Verzögerungszeit von z.B. 2s abgeschaltet (Abschaltpunkt AP). Alternativ erfolgt eine Abschaltung, wenn der Unterdruck-Istwert den Unterdruck-Sollwert um 2% (Bezogen auf den Maximalwert) überschreitet.

Durch ein nicht erfindungsgemäßes Verfahren, nämlich dass beim Erreichen des Unterdruck-Sollwertes bzw. Nennvakuums die Drehzahl der Vakuumpumpe reduziert wird, wird ein komplettes Entleeren der Druckleitung 26 verhindert, so dass eine geringe Menge an zurückströmenden Abwasser im Bereich der Druckseite eine "Schmierung" der internen Gleitlager der Vakuumpumpe sichergestellt. Während der Nachlaufzeit mit geringer Drehzahl kann das Wasser nicht vollständig aus der Druckleitung entfernt werden. Die Luft entweicht und das in der Druckleitung verbleibende Wasser strömt zurück in die Pumpe. Das Wasser kann sowohl zur "Schmierung" der Gleitlager als auch zur Selbstabdichtung der Pumpe für den Wiederanlauf dienen.

Durch ein nicht erfindungsgemäßes Verfahren kann die Vakuumpumpe mit nur einer Unterdruckmessung und ohne einen Puffertank-Behälter, wie dieser in EP 1 397 595 B1 zwingend vorgesehen ist, betrieben werden. Dies ermöglicht Einsparungen bei der Verrohrung sowie bei allen Zusatzkomponenten für eine funktionierende Kleinanlage. Der gewünschte Unterdruck wird nach Bedarf stufenlos geregelt und aufrechterhalten und somit ein konstantes Vakuumniveau gehalten, ohne dass Schaltspiel und Unterdruckschwankungen von direkt gesteuerten Vakuumpumpen bei zu geringem Volumen zu erwarten sind.

Der Unterdruck-Sollwert kann jederzeit verändert werden, wobei sich die Regelung automatisch an den veränderten Wert anpasst. Der Vakuumbedarf im Vakuumsystem wird in Echtzeit ermittelt und regelungstechnisch bei der Ansteuerung der Vakuumpumpe berücksichtigt.

Gemäß Verfahrensschritt A16 erfolgt eine Überprüfung des Drehmomentes der Vakuumpumpe in Echtzeit, wobei bei Überschreiten eines zuvor definierten Drehmoment-Grenzwertes in einem von dem Hersteller der Pumpe bzw. des Antriebs definierten Zeitraum zu einer Abschaltung der Regelung führt. Durch die Drehmomentüberwachung wird eine Differenzierung von Grobstoffen ermöglicht, die über eine Zerkleinerungsvorrichtung wie Mazeration zerkleinert werden können und Materialien, die zu hart sind und die Pumpe blockieren lassen bzw. überlasten.

Bei einer Drehmomentüberschreitung, z.B. als Folge einer Blockierung, wird in Verfahrensschritt A17 ein sogenanntes Beseitigungsprogramm gestartet. Der Programmablauf des Beseitigungsprogramms ist in Fig. 4 dargestellt.

Wird eine Drehmomentüberschreitung nicht erkannt, werden in Verfahrensschritt A18 die Antriebsströme auf Überstrom überprüft. Sobald Überströme erkannt werden, wird in Verfahrensschritt A19 eine Fehlermeldung "Überstrom" ausgegeben und in Verfahrensschritt A20 der Frequenzumrichter nicht auf betriebsbereit gesetzt.

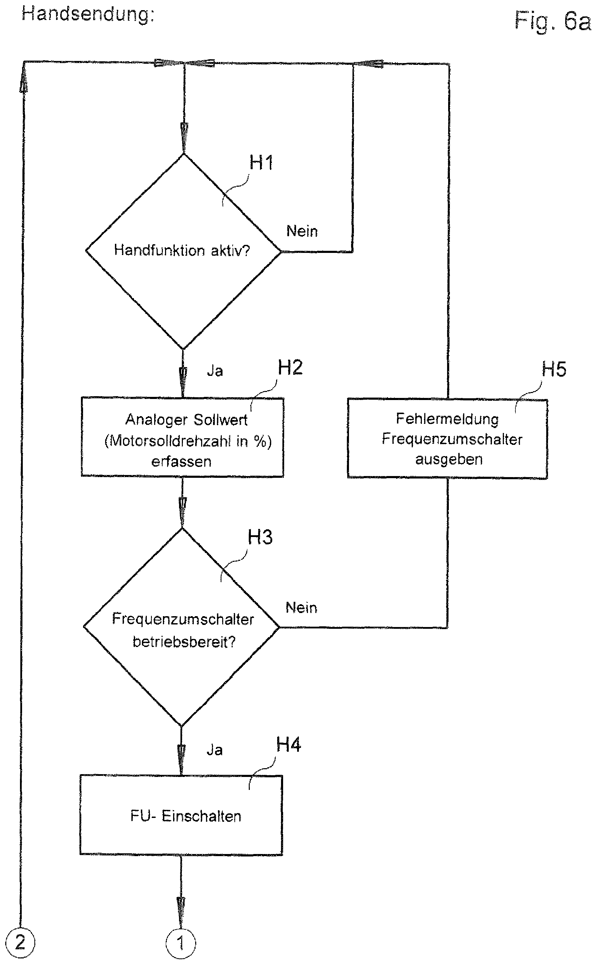

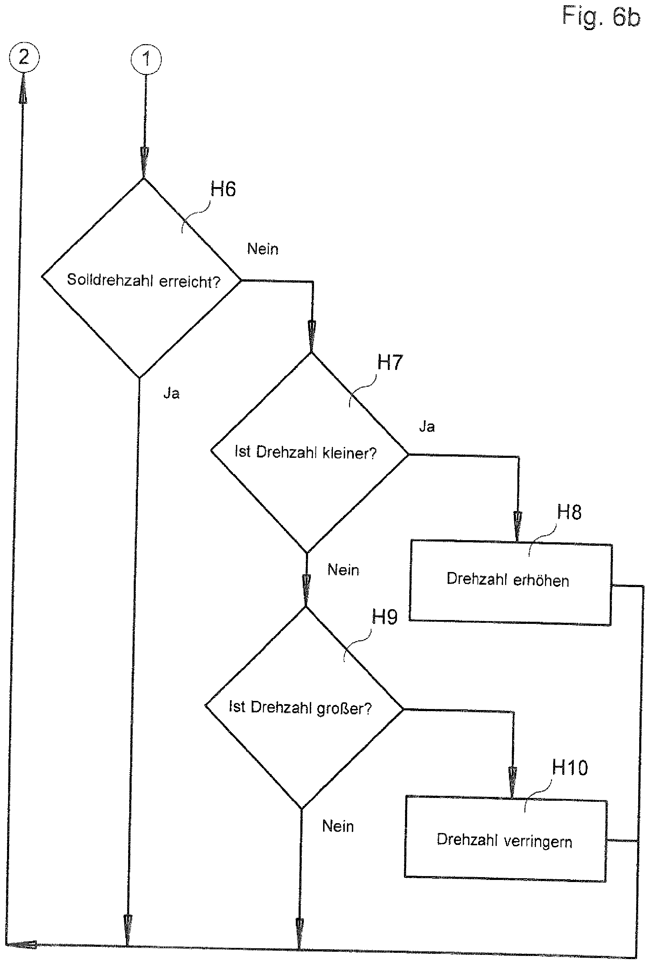

Werden in Verfahrensschritt A18 keine Überströme erkannt, wird in Verfahrensschritt A21 ein Laufzeitüberwachungsprogramm gestartet, welches in Fig. 6 dargestellt ist. Nach Verfahrensschritt A21 erfolgt der Verfahrensschritt A1, so dass der Programmablauf in sich geschlossen ist.

Zur Durchführung des Beseitigungsprogramms wird zunächst in einem Verfahrensschritt B1 der Frequenzumrichter angehalten. Anschließend erfolgt in Verfahrensschritt B2 eine Drehrichtungsumkehr der Vakuumpumpe mit maximal 10 Hz Drehfrequenz für 1s. Dabei wird die Vakuumpumpe kontrolliert um z.B. zwei Umdrehungen mit geringer Drehzahl zurückgefahren. In Verfahrensschritt B3 erfolgt eine Überprüfung, ob der Grenzwert des Drehmomentes überschritten wird. Bejahendenfalls wird in Verfahrensschritt B4 eine Fehlermeldung erzeugt und in Verfahrensschritt B5 der Frequenzumrichter nicht betriebsbereit gesetzt.

Sollte in Verfahrensschritt B3 erkannt werden, dass das Drehmoment nicht überschritten wird, wird in Verfahrensschritt B6 ein Versuchszähler um 1 erhöht. Der in Verfahrensschritt B2 beschriebene Versuch kann definiert mehrfach erfolgen. Nach jedem Versuch wird in Verfahrensschritt B7 der Versuchszähler erhöht und überprüft, ob mehr als zwei Versuche innerhalb von 2 Minuten erfolgt sind.

Ist dies nicht der Fall, wird in Verfahrensschritt B8 über die Regelung der normale Prozess wieder gestartet und das Drehmoment überwacht. Ist die Beseitigung erfolgreich gewesen und der Nennunterdruck, d.h. der Unterdruck-Sollwert ohne weitere Überschreitung des Grenzdrehmomentes erreicht worden, wird der Versuchszähler nach 2 Minuten zurückgesetzt.

Wenn nach mehr als zwei Versuchen die Blockierung nicht beseitigt werden konnte, wird in Verfahrensschritt B9 der Frequenzumrichter nicht betriebsbereit gesetzt und in Verfahrensschritt B10 eine Fehlermeldung ausgegeben.

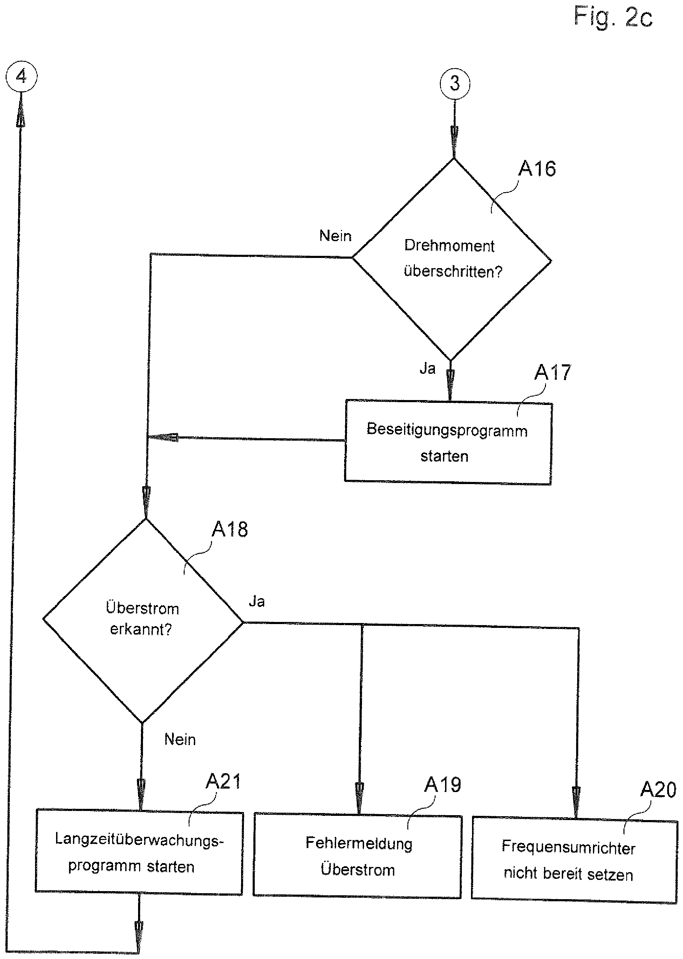

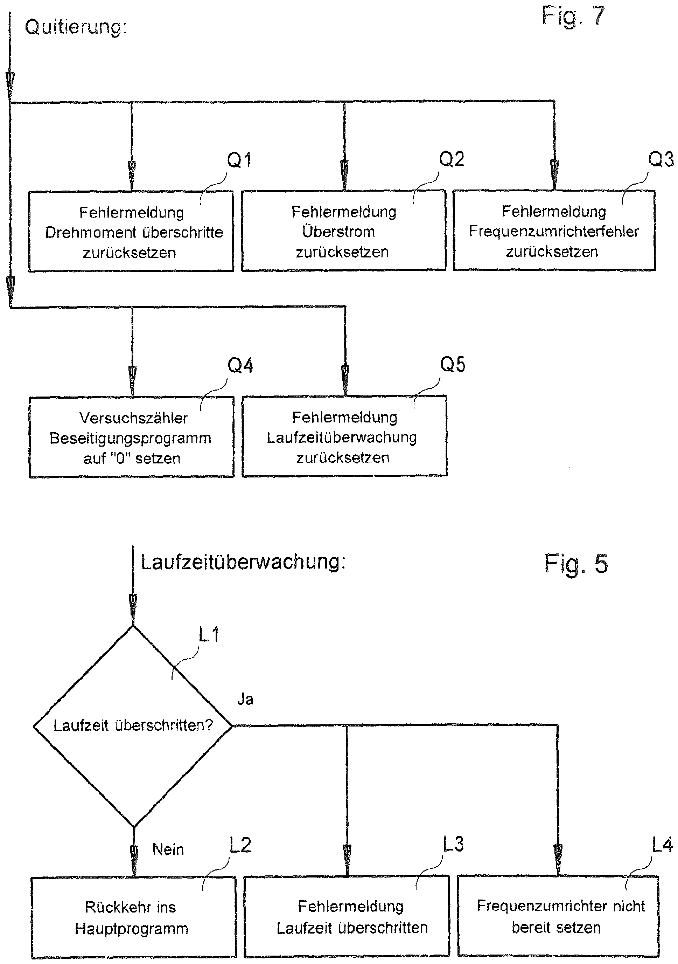

Die Laufzeitüberwachung gemäß Verfahrensschritt A21 in Fig. 2c ist als Ablaufprogramm in Fig. 5 dargestellt. In einem ersten Verfahrensschritt L1 wird überprüft, ob die Laufzeit einen vordefinierten Grenzwert überschreitet. Erfolgt keine Laufzeitüberschreitung wird in einem Verfahrensschritt L2 in das Hauptprogramm zurückgekehrt. Bei Laufzeitüberschreitung wird in Verfahrensschritt L3 eine Fehlermeldung ausgegeben und in Verfahrensschritt L4 der Frequenzumrichter abgeschaltet.

Die Regelung im Automatikbetrieb wird bei folgenden Fehlerbedingungen sofort gestoppt bzw. nicht gestartet:
- kein gültiger Messwert von der Unterdruckmessung,
- Laufzeitüberschreitung wurde ausgelöst,
- genereller Frequenzumrichterfehler (Spannung-/Stromfehler)
- Drehmomentüberschreitung.

Alternativ zu der zuvor beschriebenen Automatiksteuerung kann die Vakuumpumpenanordnung 10 auch mit manueller Handsteuerung betrieben werden. In dieser Betriebsart dient der Sollwertgeber 48 als stufenloser Drehzahlsteller. Damit kann auch im manuellen Betrieb ein beliebiges Vakuumniveau eingestellt werden. Dadurch wird ein schnelles Einstellkonzept für die Vakuumpumpenanordnung zur Verfügung gestellt.

Bei der Handsteuerung kann über den Sollwertgeber 48 stufenlos eine Soll-Drehzahl der angeschlossenen Vakuumpumpe geregelt werden. Dabei entspricht die Einstellung "0" einer Drehzahl von 0 % der Nenndrehzahl des Antriebs, wobei die Einstellung "1", d.h. Vollausschlag, einer Drehzahl von 100 % der Nenndrehzahl des Antriebs entspricht.

Ein Ablaufprogramm der Handsteuerung ist in Fig. 6a und 7b dargestellt. In einem ersten Verfahrensschritt H1 wird überprüft, ob die Handsteuerung aktiv ist. Bejahendenfalls wird in einem Verfahrensschritt H2 ein analoger Sollwert, welcher der Motordrehzahl in Prozent entspricht, erfasst, der mittels des Sollwertgebers 48 vorgegeben wird. In einem Verfahrensschritt H3 wird überprüft, ob der Frequenzumrichter 30 betriebsbereit ist. Bejahendenfalls wird der Frequenzumrichter in Verfahrensschritt H4 eingeschaltet. Anderenfalls wird in Verfahrensschritt H5 eine Fehlermeldung ausgegeben, dass der Frequenzumrichter fehlerhaft ist.

Bei eingeschaltetem Frequenzumrichter erfolgt in Verfahrensschritt H6 eine Überprüfung, ob die Soll-Drehzahl erreicht ist. Bejahendenfalls läuft der Antrieb mit der eingestellten Drehzahl im Normalbetrieb weiter.

Sollte die Soll-Drehzahl nicht erreicht werden, wird in Verfahrensschritt H7 geprüft, ob die Drehzahl kleiner als die Soll-Drehzahl ist. Bejahendenfalls wird in Verfahrensschritt H8 die Drehzahl erhöht. Ist die Drehzahl größer als die Soll-Drehzahl, wird in Verfahrensschritt H9 im Zusammenhang mit Verfahrensschritt H10 die Drehzahl verringert, bis die Soll-Drehzahl erreicht ist.

Im Fehlerfall wird eine Alarmmeldung über die Alarmmittel 50 in Form einer Alarmlampe angezeigt, die gleichzeitig auch als Quittierungstaster funktioniert. Über einen Blinktakt der Alarmleuchte können vier unterschiedliche Störmeldungen direkt unterschieden werden.

Alarm 1 (Quittierschalter 50 leuchtet permanent) signalisiert eine generelle Störung am Frequenzumrichter durch Überstrom oder unzureichende Energieversorgung. Der Alarm wird automatisch zurückgesetzt, abhängig davon, ob Alarmmeldungen noch anstehen Alarm 2 (Quittierschalter 50 blinkt in einem 1-Sekundentakt) signalisiert einen Laufzeitfehler, d.h. die Vakuumpumpe ist zu lange durchgängig gelaufen und hat abgeschaltet. Der Alarm wird durch Betätigung der Quittierung oder über die Wahlposition "Handsteuerung" zurückgesetzt, unabhängig davon, ob noch Alarmmeldungen anstehen.

Alarm 3 (Quittierschalter 50 blinkt in einem 3-Sekundentakt) signalisiert einen Drehmomentfehler, d.h. die Vakuumpumpe hat einen zu großen Widerstand erfasst und zum Selbstschutz abgeschaltet. In dieser Stellung kann der Innenraum des Pumpenkörpers auf Fremdkörper überprüft werden. Der Alarm wird durch Betätigung der Quittierung oder über die Wahlposition "Handsteuerung" zurückgesetzt, unabhängig davon, ob noch Alarmmeldungen anstehen.

Alarm 4 (Quittierschalter 50 blinkt in einem 5-Sekundentakt) signalisiert einen Messungsfehler, d.h. der angeschlossene Unterdrucksensor hat einen Defekt oder ist nicht angeschlossen. Der Alarm wird automatisch zurückgesetzt, sobald die Unterdruckmessung einen gültigen Wert liefert.

Fig. 7 zeigt den Verfahrensschritt der Quittierung von Fehlermeldungen, wobei die bei der Durchführung des Regelungsverfahrens auftretenden Fehlermeldungen entweder zurückgesetzt werden, Verfahrensschritte Q1, Q2, Q3 oder Q5, oder der Versuchszähler für das Beseitigungsprogramm gemäß Verfahrensschritt Q4 auf "0" gesetzt wird.

Zu erwähnen ist des Weiteren, dass die Vakuumpumpenanordnung 10 aus mehreren Modulen besteht, wobei durch das Modulkonzept eine modulare Erweiterung auf eine flexible Femwirkschnittstelle für die Anwendung von Leitsystemen/Fernbedienstellen mit vielen Protokollen und Hardwarelösungen möglich ist. Die Module können direkt an den Frequenzumrichter montiert und sehr platzsparend untergebracht werden.

Die elektrische Installation erfolgt über eine Schnellverbindung für die Spannungsversorgung sowie für die Vakuummessung. Die Vakuumpumpenanordnung zeichnet sich dadurch aus, dass nur die Verbindung 34, 36 zu der Spannungsversorgung 38 hergestellt werden muss und anschließend der Drucksensor 40 über einen Stecker an die speicherprogrammierbare Steuerung 32 angeschlossen wird.

Auch kann eine komplette Vakuumpumpenanordnung auf einfache Weise ausgetauscht werden, was insbesondere bei Schiffinstallationen und Installationen mit zeitkritischen Ausfallzeiten von besonderem Vorteil ist. Auch kann eine direkte Funküberwachung per Modul und Selbstversorgung über die Spannungsversorgung innerhalb des Frequenzumrichters realisiert werden.

## Patentansprüche

1. Verfahren zum Betrieb einer Vakuumpumpe (12) wie Schraubenrotor-Vakuumpumpe oder Drehkolben-Vakuumpumpe zum Fördern von Luft- und/oder Abwasser in einem Unterdruck-Entwässerungssystem, wobei die Vakuumpumpe (12) mit einem Antrieb (22) gekoppelt ist, dessen Drehzahl mittels eines Frequenzumrichters (30) gesteuert bzw. geregelt wird, wobei die Vakuumpumpe (12) eingeschaltet wird, wenn ein Unterdruck in einem Ansaugrohr (24) der Vakuumpumpe (12) unter einen vorgegebenen Grenzwert fällt,
**dadurch gekennzeichnet,**
**dass** das Drehmoment der Vakuumpumpe (12) in Echtzeit überwacht wird, dass bei Überschreiten eines Drehmoment-Grenzwertes in einem definierten Zeitraum die Frequenzumrichter-Drehzahlregelung abgeschaltet wird, dass für die Vakuumpumpe (12) eine Drehrichtungsumkehr eingeleitet wird, um eine mögliche Blockierung zu beseitigen und
**dass** die kontrollierte Drehrichtungsumkehr wiederholt wird, wobei nach jedem Versuch ein Versuchszähler erhöht, die Frequenzumrichter-Drehzahlregelung gestartet und das Drehmoment wieder überwacht wird und dass der Versuchszähler zurückgesetzt wird, wenn ein Unterdruck-Sollwert ohne Drehmomentüberschreitung erreicht wird oder die Vakuumpumpe abgeschaltet wird, wenn die Blockierung nach einer voreingestellten Anzahl von Versuchen nicht beseitigt werden konnte.

2. Verfahren nach Anspruch 1,
**dadurch gekennzeichnet,**
**dass** die Vakuumpumpe (12) kontrolliert mit geringer Drehzahl von vorzugsweise 10 Hz während einer Zeitspanne von vorzugsweise 1s zurückgefahren wird oder vorzugsweise um zwei Umdrehungen.

## Claims

1. Method for operating a vacuum pump (12) such as a screw rotor vacuum pump or rotary piston vacuum pump for conveying air and/or waste water in a negative-pressure drainage system, the vacuum pump (12) being linked to a drive (22) whose speed is controlled / regulated by means of a frequency converter (30), the vacuum pump (12) being switched on when a negative pressure in an intake pipe (24) of the vacuum pump (12) drops below a specified limit value,
**wherein**
the torque of the vacuum pump (12) is monitored in real time, the frequency converter speed regulator is switched off when a torque limit value is exceeded in a defined period, a rotation direction change is initiated for the vacuum pump (12) to eliminate a possible blockage and the controlled rotation direction change is repeated, an attempt counter being incremented after each attempt, the frequency converter speed regulator started and the torque monitored again, and the attempt counter is reset when a set negative pressure value is achieved without the torque being exceeded or the vacuum pump is switched off if the blockage was not able to be cleared after a preset number of attempts.

2. Method according to claim 1,
**wherein**
the vacuum pump (12) is reversed in controlled manner at low speed of preferably 10Hz during a period of preferably 1 s or preferably by two revolutions.

## Revendications

1. Procédé d'exploitation d'une pompe à vide (12) telle qu'une pompe à vide à moteur à vis ou qu'une pompe à vide à piston rotatif pour acheminer de l'air et/ou des eaux usées dans un réseau d'évacuation sous vide, sachant que la pompe à vide (12) est accouplée à un entraînement (22) dont le régime est commandé ou régulé via un redresseur de fréquence (30), sachant que la pompe à vide (12) est mise sous tension lorsqu'une dépression dans une tubulure d'aspiration (24) de la pompe à vide (12) baisse en dessous d'une valeur seuil prédéfinie,
**caractérisé en ce**
**que** le couple de la pompe à vide (12) est surveillé en temps réel, qu'en cas de dépassement de la valeur seuil du couple pendant une durée définie, la régulation du régime par le redresseur de fréquence est coupée, qu'est lancée une inversion du sens de rotation de la pompe à vide (12) afin de remédier à un éventuel blocage et que l'inversion du sens de rotation est répétée, sachant qu'après chaque essai, un compteur d'essais augmente, que la régulation du régime par le redresseur de fréquence est lancée et que le couple est à nouveau surveillé, et que le compteur d'essais est remis à zéro si une valeur de consigne de la dépression est atteinte sans dépassement du couple ou que la pompe à vide est coupée si le blocage n'a pas pu être éliminé après un nombre préréglé d'essais.

2. Procédé selon la revendication 1,
**caractérisé en ce**
**que** la pompe à vide (12) est inversée de manière contrôlée à un régime plus faible s'élevant de préférence à 10 Hz pendant un laps de temps d'1 s de préférence ou de deux tours de préférence.
